# EUROPÄISCHE PATENTSCHRIFT

(11) **EP 1 406 779 B1**
(45) Veröffentlichungstag und Bekanntmachung des Hinweises auf die Patenterteilung: **08.12.2004**
(21) Anmeldenummer: 02727455.4
(22) Anmeldetag: 22.03.2002
(51) Int. Cl.: B60J 10/00, B60J 10/02, B60J 10/10

(54) **FENSTERDICHTUNGSPROFIL FÜR EIN KABRIOLETT**
WINDOW SEALING STRIP FOR A CONVERTIBLE
PROFILE D'ETANCHEITE POUR FENETRES D'UNE VOITURE DECAPOTABLE

(30) Priorität: 19.07.2001 DE 20111998 U
(43) Veröffentlichungstag der Anmeldung: 14.04.2004
(73) Patentinhaber: Meteor Gummiwerke K.H. Bädje GmbH & Co. KG., 31167 Bockenem (DE)
(72) Erfinder: LANGEMANN, Uwe, 38228 Salzgitter (DE)
(74) Vertreter: Sobisch, Peter, Dipl.-Ing.
(86) Internationale Anmeldenummer: PCT/EP2002/003206
(87) Internationale Veröffentlichungsnummer: WO 2003/011623

(56) Entgegenhaltungen:
- EP-A- 0 618 101
- WO-A-01/21425
- WO-A-01/21426
- DE-A- 19 714 642
- US-A- 5 601 329
- US-A- 6 030 022

## Beschreibung

Die Erfindung betrifft ein Dichtungsprofil nach dem Oberbegriff des Anspruchs 1.

Bei einem bekannten Dichtungsprofil dieser Art (WO 01/21425 A1 der Anmelderin) findet eine metallische Trägerschiene Verwendung, mit der die Halteelemente einstückig ausgebildet sind. Das in Längsrichtung neben diesen Montagebereichen angeordnete Material der Trägerschiene muss in irgendeiner Weise entfernt, z.B. herausgestanzt, werden. Dies führt zu unerwünschtem Abfall von Material der Trägerschiene.

Aus der DE 43 14 191 C1 der Anmelderin ist an sich bekannt, ein Verbundprofil aus Kunststoffen und Elastomeren herzustellen, die chemisch aneinander gebunden sind.

Der Erfindung liegt die Aufgabe zugrunde, Abfall der Trägerschiene soweit wie möglich zu vermeiden.

Diese Aufgabe ist durch die Merkmale des Anspruchs 1 gelöst. Die Halteelemente werden gesondert hergestellt und im Anschluss an die Koextrusion der Trägerschiene und des Elastomerprofilstrangs an den gewünschten Stellen der Trägerschiene nachträglich befestigt.

Die Merkmale des Anspruchs 2 erleichtern die Montage des Dichtungsprofils am Dachrahmen des Kabrioletts.

Gemäß Anspruch 3 wird eine sichere Befestigung der Halteelemente an der Trägerschiene begünstigt.

Mit den Merkmalen des Anspruchs 4 oder 5 ergibt sich eine formschlüssige Verbindung des Halteelements mit der Trägerschiene. Bei Bedarf kann vor der Befestigung des Halteelements noch eine Justage in Längsrichtung erfolgen.

Auch gemäß Anspruch 6 erhält man eine dauerhafte Befestigung des Halteelements an der Trägerschiene, die zudem vor ihrer Fertigstellung justierbar ist.

Die Verschweißung gemäß Anspruch 7 kann bei metallischen Partnern z.B. durch Punktschweißen oder bei Kunststoffpartnem durch Ultraschallverschweißen geschehen.

Gemäß Anspruch 8 ist eine sichere Abdichtung des Elastomerprofilstrangs gegenüber dem Anschlussteil gewährleistet.

Die Merkmale des Anspruchs 9 sorgen für eine besonders gute Abdichtung und gestatten andererseits eine einfache Befestigung der Halteelemente zwischen den Dichtrippen an der Trägerschiene.

Die Merkmale des Anspruchs 10 verbessern die "Kurvengängigkeit" des Dichtungsprofils, indem sie ein seitliches Biegen des Dichtungsprofils erleichtern.

Gemäß Anspruch 11 ist eine besonders schnelle und einfache Festlegung des Dichtungsprofils an dem Dachrahmen erzielt. Auf Wunsch kann diese Verbindung leicht lösbar gestaltet werden.

Die Merkmale des Anspruchs 12 oder 13 lassen sich je nach Einsatzfall mit Vorteil benutzen.

Diese und weitere Merkmale und Vorteile der Erfindung werden nachfolgend anhand der in den Zeichnungen dargestellten Ausführungsbeispiele näher erläutert. Es zeigt:
Fig. 1 einen Querschnitt durch den Dachbereich eines-Kabrioletts mit festem Klappdach und angebautem Dichtungsprofil,
Fig. 2 eine perspektivische Darstellung eines Teils des Dichtungsprofils gemäß Fig. 1 in verkleinerter Darstellung,
Fig. 3 einen Querschnitt entsprechend Fig. 1 durch ein anderes Dichtungsprofil,
Fig. 4 eine perspektivische Darstellung des Dichtungsprofils gemäß Fig. 3 in verkleinerter Darstellung,
Fig. 5 einen Querschnitt durch ein wiederum anderes Dichtungsprofil und
Fig. 6 die Draufsicht auf eine Trägerschiene.

In allen Zeichnungsfig. sind gleiche Teile mit gleichen Bezugszahlen versehen.

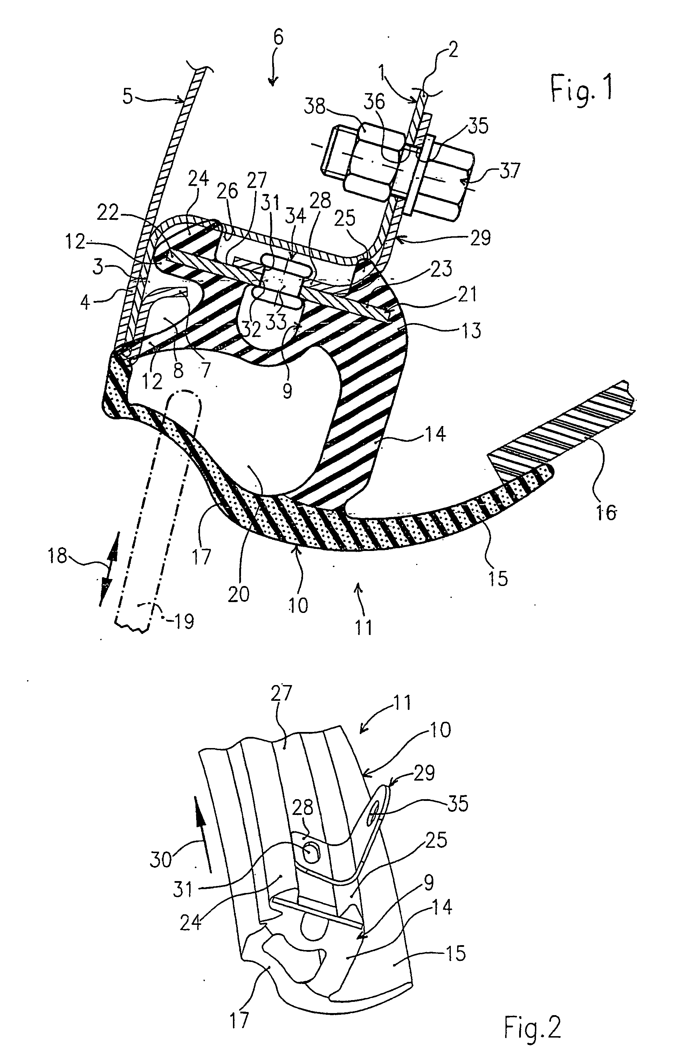

Gemäß Fig. 1 ist ein Dachrahmen 1 eines Kabrioletts mit einem dreidimensionalen aus Blech geformten Anschlussteil 1 versehen. Das Anschlussteil 1 könnte auch entsprechend der eingangs erwähnten WO 01/21425 A1 z.B. aus Aluminiumguss bestehen. Um einen Flansch 3 des Anschlussteils 2 ist ein lackiertes, sichtbares Außenblech 4 eines zugehörigen Dachteils 5 eines Klappdaches 6 herumgebördelt. Das Außenblech 4 weist einen nach innen abgebogenen, formstabilen Randflansch 7 auf, der in eine Längsnut 8 in einem Fuß 9 eines Elastomerprofilstrangs 10 eines Dichtungsprofils eingreift.

Das Außenblech 4 kann z.B. mit dem Flansch 3 verklebt sein. Die Längsnut 8 ist in einer ersten Längskante 12 des Fußes 9 ausgebildet. Von einer gegenüberliegenden zweiten Längskante 13 des Fußes 9 erstreckt sich ein Schenkel 14 des Elastomerprofilstrangs 10 unter einem Winkel von etwa 90° nach außen. An die freie Längskante des Schenkels 14 ist eine Abdecklippe 15 angeformt, die mit einer am Ende zu montierenden Innenverkleidung 16 des Dachteils 5 zusammenwirkt. Der Fuß 9 und der Schenkel 14 bestehen aus Weichgummi.

Zwischen einer freien Längskante des Schenkels 14 und der-ersten Längskante 12 des Fußes 9 ist eine Membran 17 des Elastomerprofilstrangs 10 befestigt. Die Membran 17 und die Abdecklippe 15 bestehen in diesem Fall aus Moosgummi. Die Membran 17 wirkt mit einer in den Richtungen eines Doppelpfeils 18 heb- und senkbaren seitlichen Fensterscheibe 19 des Kabrioletts abdichtend zusammen. In Fig. 1 ist die Fensterscheibe 19 strichpunktiert in ihrer geschlossenen Endstellung gezeichnet, während die Membran 17 noch ihrer unbelasteten Ausgangsstellung dargestellt ist. Im Inneren des Elastomerprofilstrangs 10 besteht ein Hohlraum 20.

Mit dem Elastomerprofilstrang 10 ist durch Koextrusion eine in diesem Fall aus Blech bestehende Trägerschiene 21 verbunden. Gemäß Fig. 1 ist ein Teil der Trägerschiene 21 einschließlich ihrer Längskanten 22 und 23 in den Fuß 9 eingeformt. An die Längskanten 12, 13 des Fußes 9 ist jeweils eine Dichtrippe 24 und 25 aus Weichgummi angeformt, die unter Vorspannung an einer Dichtfläche 26 des Anschlussteils 2 anliegen.

An einer von Elastomer freien Montagefläche 27 der Trägerschiene 21 liegt eine Basis 28 eines als Winkelstück ausgebildeten Halteelements 29 an. Die Basis 28 weist ein sich in einer Längsrichtung 30 (Fig. 2) des Dichtungsprofils 11 erstreckendes Langloch 31 auf. Mit dem Langloch fluchtet eine Bohrung 32 in der Trägerschiene 21. Ein Schaft 33 eines Niets 34 durchdringt das Langloch 31 und die Bohrung 32. Nachdem das Halteelement 29 relativ zu der Trägerschiene 21 optimal positioniert worden ist, wird das Niet 34 vernietet und befestigt auf diese Weise das Halteelement 29 bleibend an der Trägerschiene 21.

An seinem freien, in Fig. 1 oberen Ende weist das Halteelement 29 eine Bohrung 35 auf, die mit einer Bohrung 36 in dem Anschlussteil 2 fluchtet. Durch die Bohrungen 35, 36 hindurch ist ein als Schraube ausgebildetes Befestigungselement 37 hindurchgesteckt und mit einer Mutter 38 gesichert. Damit ist das Dichtungsprofil 11 an dem Anschlussteil 2 in seiner optimalen Relativstellung festgelegt.

Fig. 2 verdeutlicht vor allem die Erstreckung des Halteelementes 29 in der Längsrichtung 30. Zur besseren Übersicht ist in Fig. 2 das Niet 34 fortgelassen worden.

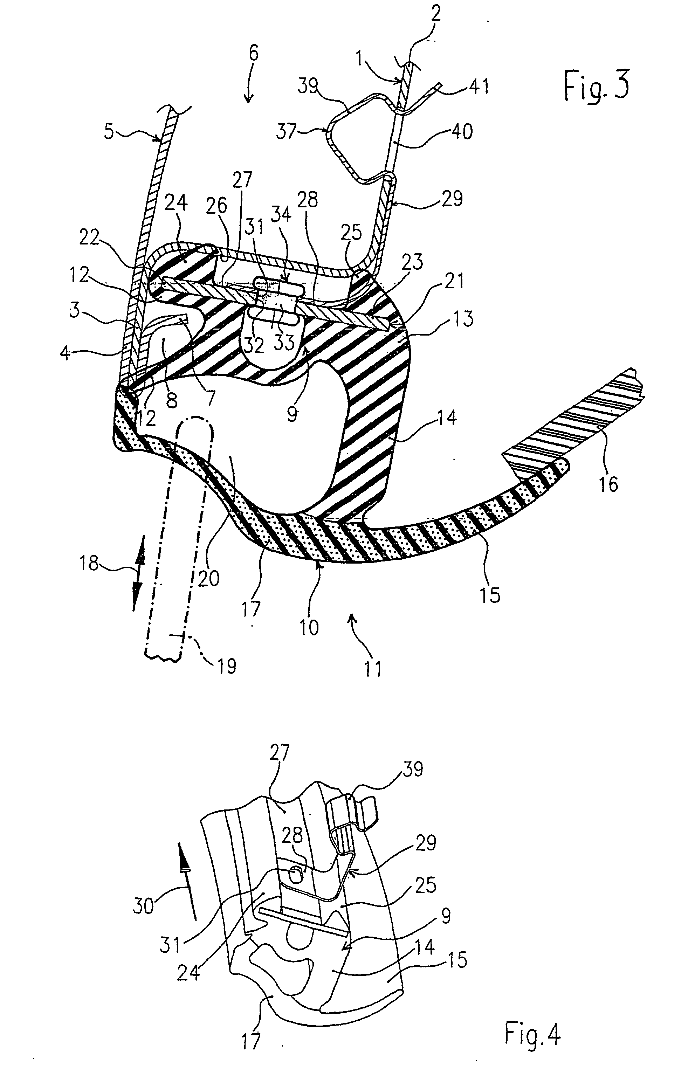

Das Ausführungsbeispiel nach den Fig. 3 und 4 gleicht demjenigen gemäß Fig. 1 und 2 mit der Ausnahme, dass das Halteelement 29 im Fall der Fig. 3 und 4 insgesamt aus Federstahl hergestellt ist. Das obere Ende des Halteelements 29 ist als Federclip 39 ausgebildet der gemäß Fig. 3 in eine Aufnahmeöffnung 40 des Anschlussteils 2 verrastend eingedrückt ist. Damit ist das Dichtungsprofil 11 unverrückbar an dem Anschlussteil festgelegt. Allerdings kann auch in diesem Fall das Dichtungsprofil 11 wieder von dem Anschlussteil gelöst werden. Dazu wird in Fig. 3 lediglich auf eine obere Lasche 41 des Federclips 39 eine Kraft nach unten und rechts ausgeübt, bis der Federclip 39 die Aufnahmeöffnung 40 wieder verlassen hat. So kann gemäß Fig. 3 und 4 das Dichtungsprofil 11 bei Beschädigung sehr schnell ausgetauscht werden.

Fig. 4 zeigt die Erstreckung des Halteelements 29 in der Längsrichtung 30.

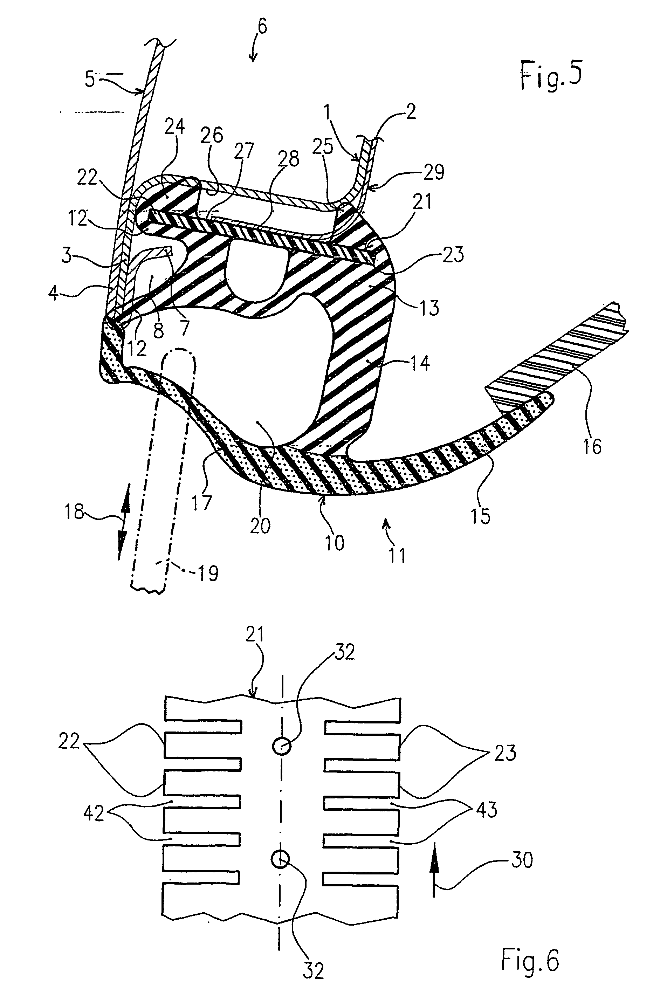

Das Ausführungsbeispiel nach Fig. 5 weicht von den zuvor beschriebenen Ausführungsbeispielen dadurch ab, dass die Trägerschiene 21 aus Kunststoff besteht, der zusammen mit dem Elastomerprofilstrang 10 koextrudiert wurde. Dies Koextrusion kann vorzugsweise gemäß der eingangs erwähnten DE 43 14 191 C1 erfolgen.

In Fig. 5 ist die Basis 28 des Halteelements 29 auf die Montagefläche 27 der Trägerschiene 21 aufgeklebt. Wenn auch das Halteelement 29 aus Kunststoff besteht, kann es durch Ultraschallverschweißung auf einfache Weise dauerhaft mit der Trägerschiene 21 verbunden werden.

Die Befestigung des Anschlussteils 2 an dem Dachrahmen 1 kann in beliebiger Weise, z.B. gemäß den Fig. 1 oder 3, erfolgen.

Gemäß Fig. 6 ist die Trägerschiene 21 an ihren Längskanten 22, 23 mit-Aussparungen 42 und 43 versehen. Dadurch lässt sich die Trägerschiene 21 in Fig. 6 um eine zu der Zeichenebene senkrechte Achse verhältnismäßig leicht biegen. Dies erleichtert die Anpassung des dreidimensionalen Dichtungsprofls 11 an die Einbausituation am Anschlussteil 2. Gegebenenfalls können auch entweder nur die Aussparungen 42 oder nur die Aussparungen 43 vorgesehen sein.

## Patentansprüche

1. Dichtungsprofil (11) zur Abdichtung einer heb- und senkbaren seitlichen Fensterscheibe (19) gegenüber einem Dachrahmen (1) eines Kabrioletts,
wobei das Dichtungsprofil (11) eine Trägerschiene (21) und einen mit der Trägerschiene (21) koextrudierten Elastomerprofilstrang (10) aufweist,
wobei das Dichtungsprofil (11) dreidimensional geformt und an Anschlussteilen (2) des Dachrahmens (1) mit Befestigungselementen (37,38;39) festlegbar ist,
und wobei wenigstens zwei in Längsrichtung (30) des Dichtungsprofils (11) im Abstand voneinander angeordnete, mit den Befestigungselementen (37,38;39) zusammenwirkende, mit der Trägerschiene (21) verbundene Halteelemente (29) aus dem Elastomerprofilstrang (10) quer zu der Längsrichtung (30) herausragen,
**dadurch gekennzeichnet, dass** die Halteelemente (29) im Anschluss an die Koextrusion an der Trägerschiene (21) befestigt sind.

2. Dichtungsprofil nach Anspruch 1,
**dadurch gekennzeichnet, dass** die Halteelemente (29) in eine für die Montage an dem Anschlussteil (2) günstige Stellung gebogen sind.

3. Dichtungsprofil nach Anspruch 1 oder 2,
**dadurch gekennzeichnet, dass** jedes Halteelement (29) mit einer Basis (28) an der Trägerschiene (21) anliegt.

4. Dichtungsprofil nach Anspruch 3,
**dadurch gekennzeichnet, dass** die Basis (28) an der Trägerschiene (21) durch ein Niet (34) befestigt ist.

5. Dichtungsprofil nach Anspruch 4,
**dadurch gekennzeichnet, dass** die Basis (28) ein sich parallel zu der Längsrichtung (30) erstreckendes Langloch (31) zur in der Längsrichtung (30) einstellbaren Aufnahme eines Schafts (33) des Niets (34) aufweist.

6. Dichtungsprofil nach Anspruch 3,
**dadurch gekennzeichnet, dass** die Basis (28) an der Trägerschiene (21) festgeklebt ist.

7. Dichtungsprofil nach Anspruch 3,
**dadurch gekennzeichnet, dass** die Basis (28) mit der Trägerschiene (21) verschweißt ist.

8. Dichtungsprofil nach einem der Ansprüche 1 bis 7,
**dadurch gekennzeichnet, dass** die Trägerschiene (21) sich in einen mit dem Anschlussteil (2) abdichtend zusammenwirkenden Fuß (9) des Elastomerprofilstrangs (10) erstreckt.

9. Dichtungsprofil nach Anspruch 8,
**dadurch gekennzeichnet, dass** der Fuß (9) im Bereich von Längskanten (22,23) der Trägerschiene (21) mit Dichtrippen (24,25) versehen ist, wobei jede Dichtrippe (24,25) sich in der Längsrichtung (30) erstreckt und mit dem Anschlussteil (2) abdichtend zusammenwirkt.

10. Dichtungsprofil nach einem der Ansprüche 1 bis 9,
**dadurch gekennzeichnet, dass** die Trägerschiene (21) an wenigstens einer ihrer Längskanten (22;23) mit Aussparungen (42;43) versehen ist.

11. Dichtungsprofil nach einem der Ansprüche 1 bis 10,
**dadurch gekennzeichnet, dass** jedes Befestigungselement (37) als an dem Halteelement (29) befestigter Federclip (39) ausgebildet ist, der in eine Aufnahmeöffnung (40) des Anschlussteils (2) verrastend eindrückbar ist.

12. Dichtungsprofil nach einem der Ansprüche 1 bis 11,
**dadurch gekennzeichnet, dass** die Trägerschiene (21) aus einem Blechstreifen besteht.

13. Dichtungsprofil nach einem der Ansprüche 1 bis 11,
**dadurch gekennzeichnet, dass** die Trägerschiene (21) aus Kunststoff besteht.

## Claims

1. Profiled seal (11) for sealing a side window pane (19) which can be raised and lowered relative to a roof frame (1) of a convertible,
wherein the profiled seal (11) has a support rail (21) and a profiled elastomeric strip (10) which is co-extruded with the support rail (21),
wherein the profiled seal (11) is formed three-dimensionally and can be fixed on connecting parts (2) of the roof frame (1) with fixing elements (37, 38; 39),
and wherein at least two retaining elements (29), which are disposed spaced from one another in the longitudinal direction (30) of the profiled seal (11), co-operate with the fixing elements (37, 38; 39) and are connected to the support rail (21), project out of the profiled elastomeric strip (10) transversely with respect to the longitudinal direction (30),
**characterized in that** following the co-extrusion the retaining elements (29) are fixed on the support rail (21).

2. Profiled seal as claimed in Claim 1, **characterized in that** the retaining elements (29) are bent into a position which is favourable for the mounting on the connecting part (2).

3. Profiled seal as claimed in Claim 1 or 2, **characterized in that** each retaining element (29) bears with a base (28) on the support rail (21).

4. Profiled seal as claimed in Claim 3, **characterized in that** the base (28) is fixed on the support rail (21) by a rivet (34).

5. Profiled seal as claimed in Claim 4, **characterized in that** the base (28) has a longitudinal slot (31) extending in parallel with the longitudinal direction (30) for a shank (33) of the rivet (34) to be received adjustably in the longitudinal direction (30).

6. Profiled seal as claimed in Claim 3, **characterized in that** the base (28) is securely glued on the support rail (21).

7. Profiled seal as claimed in Claim 3, **characterized in that** the base (28) is welded to the support rail (21).

8. Profiled seal as claimed in one of Claims 1 to 7, **characterized in that** the support rail (21) extends into a foot (9) of the profiled elastomeric strip (10) which co-operates in a sealing manner with the connecting part (2).

9. Profiled seal as claimed in Claim 8, **characterized in that** the foot (9) is provided with sealing ribs (24, 25) in the region of long edges (22, 23) of the support rail (21), wherein each sealing rib (24, 25) extends in the longitudinal direction (30) and co-operates in a sealing manner with the connecting part (2).

10. Profiled seal as claimed in one of Claims 1 to 9, **characterized in that** the support rail (21) is provided with cut-outs (42; 43) on at least one of its long edges (22; 23).

11. Profiled seal as claimed in one of Claims 1 to 10, **characterized in that** each fixing element (37) is constructed as a spring clip (39) which is fixed on the retaining element (29) and can be pushed into a receiving opening (40) in the connecting part (2) so as to latch there.

12. Profiled seal as claimed in one of Claims 1 to 11, **characterized in that** the support rail (21) is made from a sheet metal strip.

13. Profiled seal as claimed in one of Claims 1 to 11, **characterized in that** the support rail (21) is made from plastic.

## Revendications

1. Profilé de joint d'étanchéité (11) pour rendre étanche une vitre de fenêtre latérale (19) montante et descendante, par rapport à un cadre de toit (1) d'un cabriolet,
le profilé de joint d'étanchéité (11) présentant un rail porteur (21) et une bande profilée en élastomère (10) co-extrudée avec le rail porteur (21),
le profilé de joint d'étanchéité (11) étant façonné en trois dimensions et apte à être fixé avec des organes de fixation (37, 38; 39) à des pièces de raccordement (2) du cadre de toit (1),
et au moins deux organes de maintien (29), disposés à distance l'un de l'autre dans la direction longitudinale (30) du profilé de joint d'étanchéité (11), coopérant avec les organes de fixation (37, 38; 39) et liés au rail porteur (21), dépassant de la bande profilée en élastomère (10) perpendiculairement à la direction longitudinale (30),
**caractérisé en ce que**
les organes de maintien (29) sont fixés sur le rail porteur (21), en raccord à la co-extrusion.

2. Profilé de joint d'étanchéité suivant la revendication 1,
**caractérisé en ce que** les organes de maintien (29) sont pliés dans une position favorable pour le montage sur la pièce de raccordement (2).

3. Profilé de joint d'étanchéité suivant la revendication 1 ou 2,
**caractérisé en ce que** chaque organe de maintien (29) repose avec une base (28) sur le rail porteur (21).

4. Profilé de joint d'étanchéité suivant la revendication 3,
**caractérisé en ce que** la base (28) est fixée par un rivet (34) sur le rail porteur (21).

5. Profilé de joint d'étanchéité suivant la revendications 4,
**caractérisé en ce que** la base (28) présente un trou oblong (31), s'étendant parallèlement à la direction longitudinale (30) pour recevoir une tige (33) du rivet (34), avec possibilité de réglage dans la direction longitudinale (30).

6. Profilé de joint d'étanchéité suivant la revendication 3,
**caractérisé en ce que** la base (28) est fixée par collage sur le rail porteur (21).

7. Profilé de joint d'étanchéité suivant la revendication 3,
**caractérisé en ce que** la base (28) est soudée au rail porteur (21).

8. Profilé de joint d'étanchéité suivant l'une des revendications 1 à 7,
**caractérisé en ce que** le rail porteur (21) s'étend dans un pied (9) de la bande profilée en élastomère (10), agissant en coopération pour assurer l'étanchéité avec la pièce de raccordement (2).

9. Profilé de joint d'étanchéité suivant la revendication 8,
**caractérisé en ce que** le pied (9) est muni, dans la zone d'arêtes longitudinales (22, 23), de nervures d'étanchéité (24, 25), chaque nervure d'étanchéité (24, 25) s'étendant dans la direction longitudinale (30) et agissant en coopération avec la pièce de raccordement (2), pour assurer l'étanchéité.

10. Profilé de joint d'étanchéité suivant l'une des revendications 1 à 9,
**caractérisé en ce que** le rail porteur (21) est muni d'évidements (42; 43), sur au moins l'une des ses arêtes longitudinales (22; 23).

11. Profilé de joint d'étanchéité suivant l'une des revendications 1 à 10,
**caractérisé en ce que** chaque organe de fixation (37) est réalisé sous la forme d'un clip à ressort (39) fixé à l'organe de maintien (29), clip que l'on peut faire pénétrer par pression de manière à l'enclencher dans une ouverture de réception (40) de la pièce de raccordement (2).

12. Profilé de joint d'étanchéité suivant l'une des revendications 1 à 11,
**caractérisé en ce que** le rail porteur (21) est constitué d'une bande de tôle.

13. Profilé de joint d'étanchéité suivant l'une des revendications 1 à 11,
**caractérisé en ce que** le rail porteur (21) est constitué de matière synthétique.
